# FASCICULE DE BREVET EUROPEEN

(11) **EP 3 936 359 B1**
(45) Date de publication et mention de la délivrance du brevet: **10.05.2023**
(21) Numéro de dépôt: 21183906.3
(22) Date de dépôt: 06.07.2021
(51) Int. Cl.: B60K 11/04, B61C 3/00

(54) **DISPOSITIF DE VENTILATION DE MOTEUR D'ENTRAINEMENT, NOTAMMENT DE MOTEUR D'ENTRAINEMENT DE VÉHICULE FERROVIAIRE, ET VÉHICULE ASSOCIÉ**
BELÜFTUNGSVORRICHTUNG EINES ANTRIEBMOTORS, INSBESONDERE EINES ANTRIEBMOTORS EINES SCHIENENFAHRZEUGS UND ENTSPRECHENDES FAHRZEUG
VENTILATION DEVICE FOR DRIVE MOTOR, IN PARTICULAR A DRIVE MOTOR OF A RAILWAY VEHICLE, AND ASSOCIATED VEHICLE

(30) Priorité: 06.07.2020 FR 2007148
(43) Date de publication de la demande: 12.01.2022
(73) Titulaire: ALSTOM Transport Technologies, 93400 Saint-Ouen (FR)
(72) Inventeur: DUBOIS, Philippe, 25620 TREPOT (FR)
(74) Mandataire: Lavoix

(56) Documents cités:
- WO-A1-2018/011145
- DE-A1- 3 236 794
- FR-A1- 3 021 257
- JP-A- 2017 198 135
- US-A- 5 373 892
- US-A1- 2009 057 043

## Description

La présente invention concerne un dispositif de ventilation de moteur d'entraînement, notamment de moteur d'entraînement de véhicule ferroviaire, comprenant:
- un arbre central s'étendant selon un axe central, destiné à être entrainé en rotation par ledit moteur d'entrainement ;
- un carter, disposé autour de l'arbre central et comprenant une pluralité d'orifices de ventilation, le carter comprenant une face intérieure et une face extérieure.

Les dispositifs de ventilation de moteurs d'entrainement, et notamment de moteurs d'entrainement de véhicules ferroviaire, assurent la circulation d'air autour des éléments de refroidissement du moteur. La circulation d'air autour des éléments de refroidissement du moteur assure une évacuation de la chaleur depuis les composants du moteur à l'écart du moteur ce qui limite l'échauffement du moteur et assure ainsi une efficacité du moteur optimisée tout en améliorant la sécurité.

Il est connu d'utiliser des dispositifs de ventilation de moteurs d'entrainement comprenant un ventilateur radial dont l'axe de rotation est connecté à un arbre central du moteur d'entrainement. La vitesse de rotation d'un tel ventilateur est alors identique à la vitesse de rotation de l'arbre de rotation et l'évacuation de chaleur dépend alors de la vitesse de rotation du moteur.

US 5 373 892 A et JP 2017 198135 A divulguent des dispositifs de ventilation de moteurs.

De tels dispositifs de ventilation ne donnent toutefois pas entière satisfaction. En effet, la vitesse de rotation du ventilateur peut s'avérer insuffisante lorsque le moteur tourne à faible régime. Le ventilateur d'un tel dispositif de ventilation doit par ailleurs être de grande dimension pour assurer un flux d'air suffisant pour le refroidissement, ce qui génère un bruit aéraulique élevé. De tels dispositifs sont en outre facilement obturables par des éléments extérieurs au dispositif, tels des feuillages ou des déchets, le blocage du flux d'air pouvant alors causer une surchauffe du moteur.

Un but de cette invention est alors de proposer un dispositif de ventilation dont les performances de ventilation sont élevées, dont le bruit aéraulique est faible et dont les risques d'obturation sont faibles.

A cet effet, l'invention a pour objet un dispositif de ventilation conforme à la revendication 1.

Un tel dispositif de ventilation par l'utilisation d'une pluralité de ventilateurs axiaux entrainés par de tels moyens d'entrainement, permet de réduire le bruit aéraulique tout en offrant des performations de ventilation élevées. Ce dispositif, permet en outre, en étant configuré pour générer un flux d'air depuis la face extérieure vers la face intérieure, et inversement, de limiter les risques d'obturation.

Selon des modes de réalisation particuliers de l'invention, le dispositif de ventilation présente l'une ou plusieurs des caractéristiques des revendications 1 à 9, prise(s) isolément ou suivant toute(s) combinaison(s) techniquement possible(s).

L'invention concerne en outre un véhicule notamment ferroviaire, comprenant un dispositif de ventilation tel que précité.

D'autres caractéristiques et avantages de l'invention apparaîtront à la lecture de la description qui va suivre, donnée uniquement à titre d'exemple et faite en se référant aux dessins annexés, dans lesquels :
[Fig 1] la figure 1 est une représentation schématique en coupe transversale, selon un plan comprenant un axe central, d'un véhicule comprenant un dispositif de ventilation selon un premier mode de réalisation de l'invention ;
[Fig 2] la figure 2 est une représentation schématique vue de face, perpendiculairement à l'axe central, du dispositif de ventilation de la figure 1 ;
[Fig 3] la figure 3 est une représentation semblable à la figure 2 d'un dispositif de ventilation selon un deuxième mode de réalisation de l'invention ;
[Fig 4] la figure 4 est une représentation semblable à la figure 2 d'un dispositif de ventilation selon un troisième mode de réalisation de l'invention ;
[Fig 5] la figure 5 est une représentation semblable à la figure 2 d'un dispositif de ventilation selon un quatrième mode de réalisation de l'invention ; et
[Fig 6] la figure 6 est une représentation semblable à la figure 2 d'un dispositif de ventilation selon un cinquième mode de réalisation de l'invention.

Dans la suite de la description, les termes « intérieur » et « extérieur » sont utilisés en référence à la distance au moteur d'entrainement, un élément disposé vers l'intérieur étant plus proche du moteur d'entrainement qu'un élément disposé vers l'extérieur.

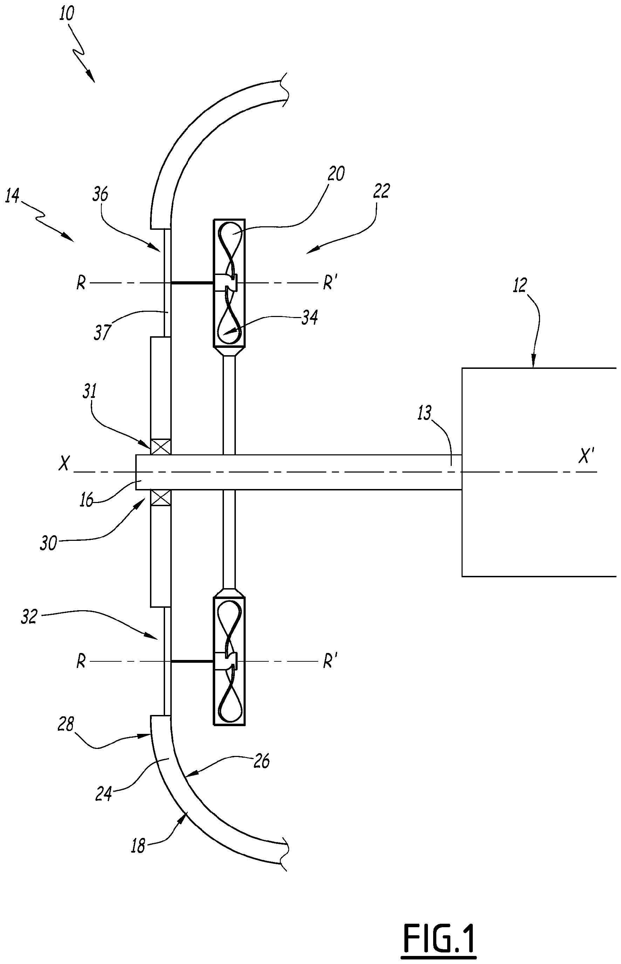

En référence à la figure 1, un véhicule 10 comprend un moteur d'entrainement 12 et un dispositif de ventilation 14 du moteur d'entrainement 12.

Le véhicule 10 est de préférence un véhicule ferroviaire. Le véhicule 10 est par exemple une locomotive ou une automotrice. En variante, le véhicule 10 est un véhicule routier tel un camion ou un bus.

Le véhicule 10 comprend par exemple une pluralité de moteurs d'entrainement 12 et de dispositifs de ventilation 14. En particulier, le véhicule ferroviaire 10 comprend un dispositif de ventilation 14 pour chaque moteur d'entrainement 12.

Le moteur d'entrainement 12 est par exemple un moteur d'entrainement électrique. Le moteur d'entrainement 12 est en variante un moteur thermique. Le moteur d'entrainement est en particulier adapté pour déplacer le véhicule 10.

Le moteur d'entrainement 12 comprend avantageusement un arbre moteur 13.

Le moteur d'entrainement 12 est adapté pour fonctionner à différents régimes. Le moteur d'entrainement 12 est adapté pour entrainer l'arbre moteur 13 à différentes vitesses de rotation. Le moteur d'entrainement 12 est en particulier adapté pour entrainer l'arbre moteur 13 en rotation selon deux sens différents.

Le dispositif de ventilation 14 comporte un arbre central 16, un carter 18, une pluralité de ventilateurs axiaux 20 et des moyens d'entrainement 22 de la pluralité de ventilateurs axiaux 20. Dans la suite de la description, le terme ventilateur 20 et le terme ventilateur axial 20 ont la même signification et désignent un ventilateur axial tel que par exemple représenté sur les figures 1 à 6.

L'arbre central 16 s'étend selon un axe central X-X'. L'arbre central 16 est destiné à être entrainé en rotation par le moteur d'entrainement 12. L'arbre central 16 s'étend en particulier dans le prolongement de l'arbre moteur 13. L'arbre central 16 est de préférence l'arbre moteur 13. L'arbre central 16 est alors adapté pour tourner selon deux sens différents.

Le carter 18 est disposé autour de l'arbre central 16. Le carter 18 comprend en particulier une paroi 24.

La paroi 24 comprend une face intérieure 26 et une face extérieure 28, la face intérieure 26 étant opposée à la face extérieure 28. La face intérieure 26 s'étend en regard du moteur d'entrainement 12 et la face extérieure 28 est disposée vers l'extérieur du carter 28.

La paroi 24 s'étend radialement autour de l'arbre central 16. La paroi 24 définit alors un orifice de passage 30 de l'arbre central 16 autour de l'arbre central 16.

Comme représenté en figure 1, la paroi comprend avantageusement un roulement 31 pour autoriser la rotation de l'arbre central 16 autour de l'axe central X-X' par rapport à la paroi 24. Le roulement 31 s'étend dans l'orifice de passage 30 entre l'arbre central 16 et le bord de l'orifice de passage 30.

La paroi 24 comprend une pluralité d'orifices de ventilation 32. La paroi 24 comprend par exemple entre trois et douze orifices de ventilation 32, de préférence entre trois et six orifices de ventilation 32

La paroi 24 comprend un orifice de ventilation 32 pour chaque ventilateur axial 20.

Chaque orifice de ventilation 32 est de préférence disposé radialement autour de l'orifice de passage 30. Deux orifices de ventilation 32 adjacents forment entre eux un angle d'écartement par rapport à l'axe central X-X'. L'angle d'écartement est par exemple sensiblement constant pour chaque couple d'orifices de ventilation 32 adjacent. Autrement dit, les orifices de ventilation 32 sont disposés régulièrement autour de l'axe central X-X'.

Chaque ventilateur axial 20 est disposé dans un orifice de ventilation. Chaque ventilateur 20 est adapté pour déplacer de l'air entre la face intérieure 26 et la face extérieure 28 au travers d'un orifice de ventilation 32.

Chaque ventilateur 20 comprend en particulier un corps 34et un support 36.

Le corps 34 comporte un moyeu ainsi qu'une pluralité de pâles 35. Le moyeu défini un axe de rotation R-R' du ventilateur 20.

Chaque support 36 coopère avec un orifice de ventilation 32 pour maintenir le corps 34 d'un ventilateur 20 respectif mobile en rotation autour de son axe de rotation respectif par rapport au carter 18.

Chaque support 36 comprend par exemple une grille 37 et un roulement de ventilateur.

L'axe de rotation de chacun des ventilateurs 20 est de préférence sensiblement parallèle à l'axe central.

La pluralité des ventilateur axiaux 20 est disposée radialement autour de l'axe central X-X'. Deux ventilateurs 20 adjacents forment entre eux un angle d'écartement par rapport à l'axe central X-X'. L'angle d'écartement est par exemple sensiblement constant pour chaque couple de ventilateurs 20 adjacents de la pluralité de ventilateurs 20. Autrement dit, les ventilateurs 20 sont disposés régulièrement autour de l'axe central X-X'.

La pluralité de ventilateurs 20 s'étend par exemple dans un plan sensiblement perpendiculaire à l'axe central X-X'.

Les moyens d'entrainement 22 sont adaptés pour entrainer en rotation la pluralité de ventilateurs axiaux 20 pour générer un flux d'air entre la face intérieure 26 et la face extérieure 28. Les moyens d'entrainement sont en particulier adaptés pour générer un flux d'air depuis la face intérieure 26 vers la face extérieure 28 lorsqu'ils sont dans une première configuration et pour générer un flux d'air depuis la face extérieure 28 vers la face intérieure 26 lorsqu'ils sont dans une deuxième configuration.

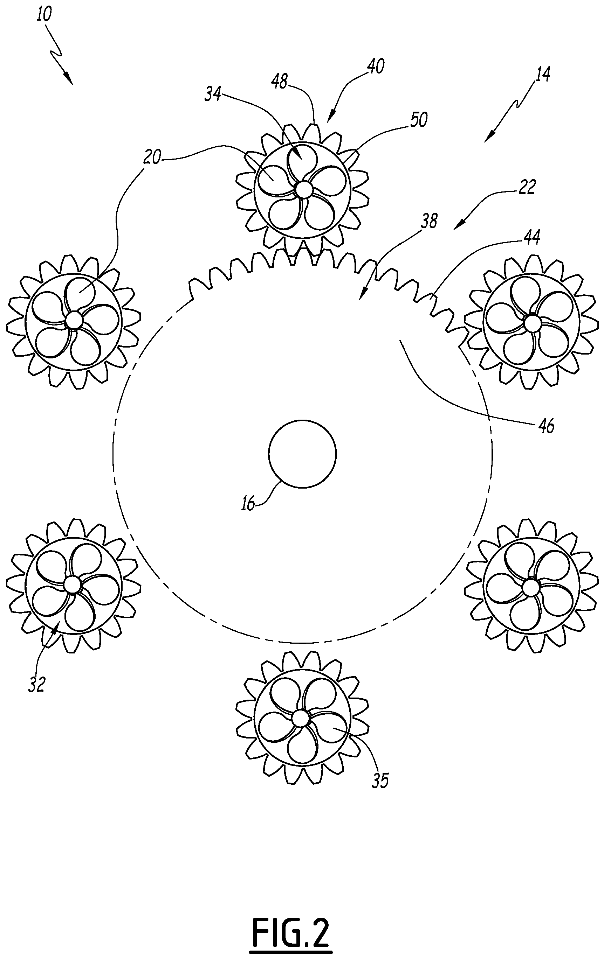

En référence à la figure 2, un premier mode de réalisation de l'invention va être présenté. Selon ce premier mode de réalisation, les moyens d'entrainement 22 comprennent le moteur d'entrainement 12, une roue dentée 38 et, pour chaque ventilateur 20, un pignon 40.

La roue dentée 38 est solidaire en rotation de l'arbre central 16 et s'étend radialement autour de l'arbre central 16. La roue dentée 38 comprend par exemple un ensemble de dents principales 44 et un corps 46 de roue dentée, connectant les dents principales à l'arbre central 16. Chaque roue dentée comprend par exemple entre trente et quatre-vingt-dix dents principales 44.

La roue dentée 38 coopère avec chaque pignon 40 pour entrainer en rotation chaque pignon 40 et chaque ventilateur 20 lors de la rotation de l'arbre central 16.

Chaque pignon 40 est solidaire en rotation d'un ventilateur axial 20. Chaque pignon 40 comprend par exemple un ensemble de dents secondaires 48 et un corps 50 de pignon connectant les dents secondaires 48 au ventilateur 20. Chaque pignon comprend par exemple entre dix et trente dents secondaires 48.

Le corps 50 de pignon forme par exemple, comme illustré en figure 2, une couronne disposée autour du corps 34 de ventilateur et connecte alors les dents secondaires 48 à l'extrémité radiale des pâles 35.

Les dents secondaires 48 coopèrent avec les dents principales 44 pour entrainer en rotation chaque ventilateur 20 lors de la rotation de l'arbre central 16. Le rapport du nombre de dents principales 44 sur le nombre de dents secondaires 48 est de préférence supérieur à trois . La vitesse de rotation de chaque ventilateur 20 est alors de préférence au moins trois fois supérieure à la vitesse de rotation de l'arbre central 16.

Selon ce premier mode de réalisation et selon l'ensemble des modes de réalisations présentés, la vitesse de rotation du ventilateur 20 par rapport à la vitesse de rotation de l'arbre central 16 est définie en fonction du diamètre du ventilateur et du rendement optimal du ventilateur 20. Par exemple, si la vitesse de rotation du moteur d'entrainement 12 et de l'arbre central 16 est de 4000 tour/min, la vitesse de rotation de chaque ventilateur 20 est par exemple sensiblement égale à 12000 tour/min.

Selon ce premier mode de réalisation, chaque ventilateur 20 est entrainé en rotation dans un sens de rotation inversé par rapport au sens de rotation de l'arbre central 16.

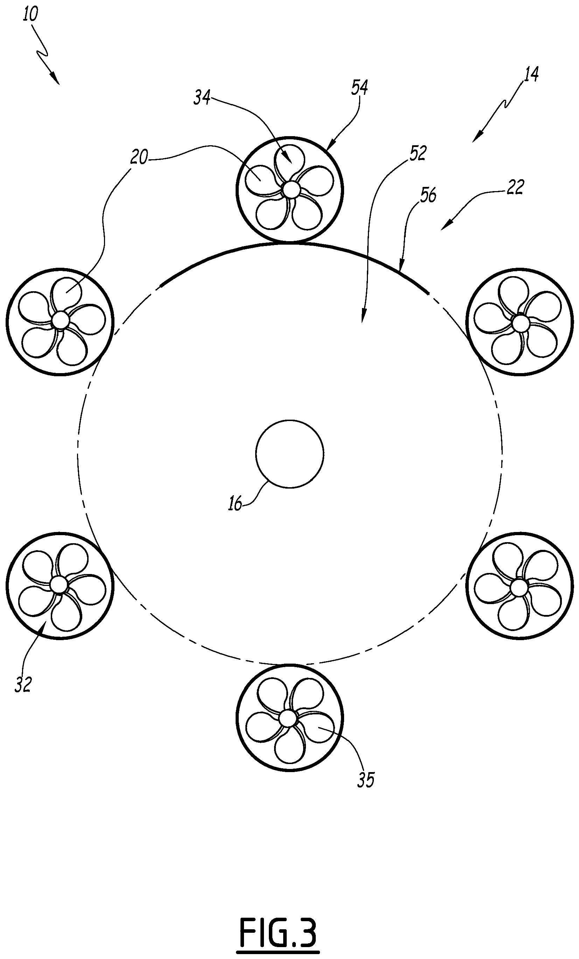

En référence à la figure 3, un deuxième mode de réalisation de l'invention va maintenant être présenté. Ce deuxième mode de réalisation diffère du premier mode de réalisation uniquement par ce qui suit. Les éléments analogues portent les mêmes références.

Selon ce deuxième mode de réalisation, les moyens d'entrainement 22 comprennent le moteur d'entrainement 12, une roue d'entrainement 52 et, pour chaque ventilateur 20, un contour d'entrainement 54.

La roue d'entrainement 52 est solidaire en rotation autour de l'arbre central 16 et s'étend radialement autour de l'arbre central 16. La roue d'entrainement 54 définit une périphérie comprenant une bande d'entrainement 56. La bande d'entrainement 56 coopère avec le contour d'entrainement 54 en générant une friction. La bande d'entrainement comporte par exemple une bande en polymère, par exemple en élastomère tel du caoutchouc.

La friction est en particulier adaptée pour entrainer en rotation chaque ventilateur 20 lors de la rotation de l'arbre central 16. La friction est de préférence suffisamment élevée pour assurer un déplacement du contour d'entrainement 54 sans glissement sur la bande d'entrainement 56. En particulier, chaque contour d'entrainement 54 est destiné à rouler sans glissement sur la roue d'entrainement 52. Le coefficient de frottement statique du contour d'entrainement 54 sur la bande d'entrainement est par exemple supérieur à 0,3.

Le contour d'entrainement 54 forme par exemple, comme illustré en figure 3, un anneau disposé autour du corps 34 de ventilateur. Le contour d'entrainement 54 forme en particulier un anneau périphérique fixé à l'extrémité radiale des pâles 35. Le contour d'entrainement comporte par exemple une bande en polymère, par exemple en élastomère tel du caoutchouc.

Le diamètre de la roue d'entrainement 52 est de préférence supérieur à au moins trois fois le diamètre du contour d'entrainement 54. La vitesse de rotation de chaque ventilateur 20 est alors de préférence au moins trois fois supérieure à la vitesse de rotation de l'arbre central 16.

Selon ce deuxième mode de réalisation, chaque ventilateur 20 est entrainé en rotation dans un sens de rotation inversé par rapport au sens de rotation de l'arbre central 16.

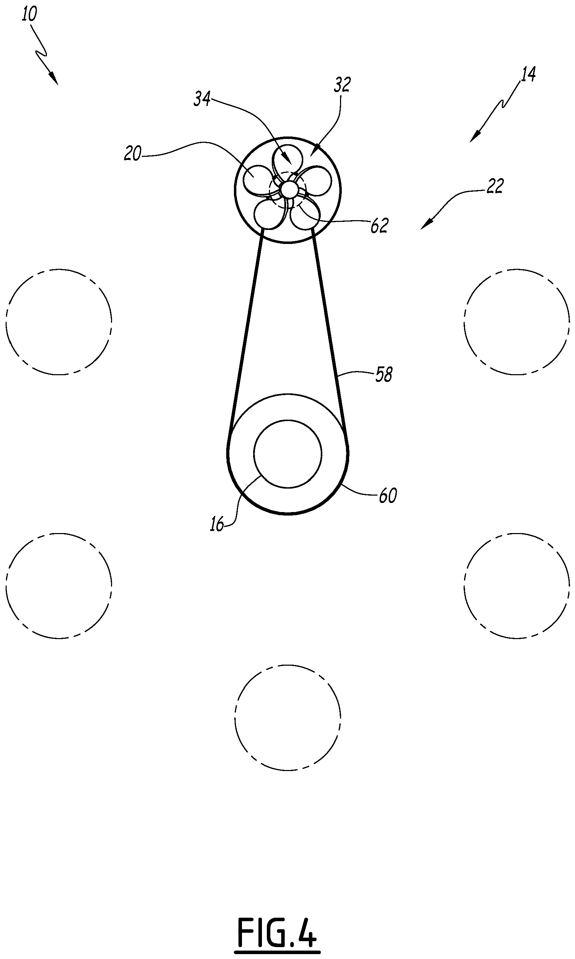

En référence à la figure 4, un troisième mode de réalisation de l'invention va maintenant être présenté. Ce troisième mode de réalisation diffère des modes de réalisation précédemment présentés uniquement par ce qui suit. Les éléments analogues portent les mêmes références.

Selon ce troisième mode de réalisation, les moyens d'entrainement 22 comprennent le moteur d'entrainement 12, et au moins une courroie 58. Les moyens d'entrainement 22 comprennent de préférence une courroie 58 par ventilateur 20.

L'arbre central 16 comprend une région d'entraînement de courroie 60. La région d'entrainement de courroie 60 est par exemple configurée pour guider chaque courroie sur l'arbre central 16.

Le ventilateur 20 comprend par exemple une région entrainée 62. La région entrainée est par exemple configurée pour guider chaque courroie sur un des corps 34 de ventilateur 20.

La courroie 58 comprend avantageusement des crans adaptés pour coopérer à des crans de la région d'entrainement 60 et à des crans de la région entrainée 62. En variante, la courroie 58 est lisse et coopère avec la région d'entrainement 60 et avec la région entrainée 62 par frottement.

La courroie 58 coopère avec l'arbre central 16 et avec au moins un ventilateur 20 pour entrainer le ou les ventilateurs 20 lors de la rotation de l'arbre central 16.

Le diamètre de la région d'entrainement 60 est de préférence supérieur à au moins trois fois le diamètre de la région entrainée 62. La vitesse de rotation de chaque ventilateur 20 est alors de préférence au moins trois fois supérieure à la vitesse de rotation de l'arbre central 16.

Selon ce troisième mode de réalisation, chaque ventilateur 20 est entrainé en rotation soit dans le même sens que le sens de rotation de l'arbre central 16, soit dans un sens de rotation inversé par rapport au sens de rotation de l'arbre central 16.

En particulier, dans la variante présentée en figure 4, la courroie 58 définit, vu dans un plan perpendiculaire à l'axe central X-X', un unique contour autour de la région d'entrainement 60 et de la région entrainée 62. Chaque ventilateur 20 est alors entrainé en rotation dans le même sens que l'arbre central 16.

En alternative, la courroie 58 définit, vu dans un plan perpendiculaire à l'axe central X-X', deux contours, un premier contour étant disposé autour de la région d'entrainement 60 et un deuxième contour étant disposé autour de la région entrainée 62. En d'autres termes, la courroie est croisée entre la région d'entrainement 60 et la région entrainée 62 et définit alors, dans le plan perpendiculaire à l'axe central X-X', une forme de huit. Chaque ventilateur 20 est alors entrainé en rotation dans un sens de rotation inversé par rapport au sens de rotation de l'arbre central 16.

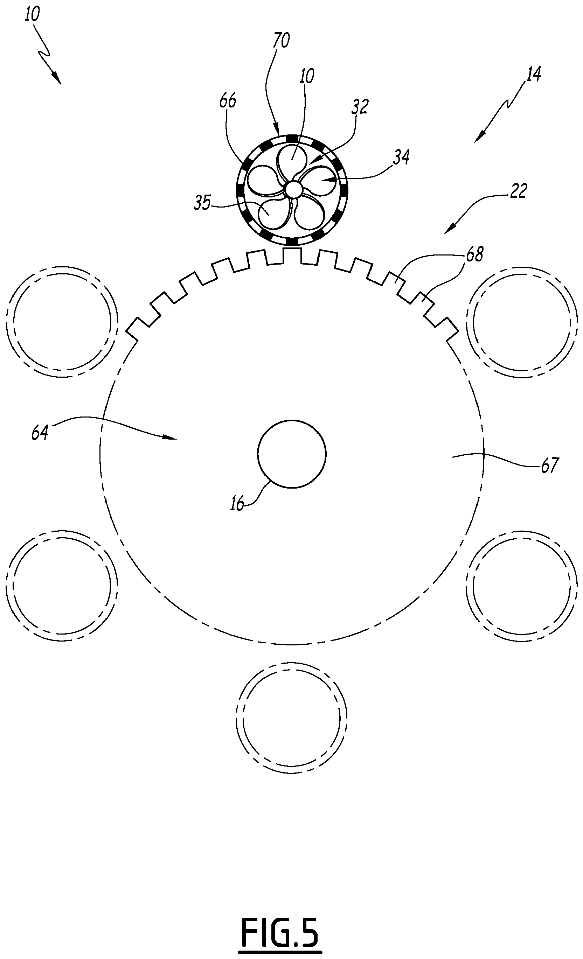

En référence à la figure 5, un quatrième mode de réalisation de l'invention va maintenant être présenté. Ce quatrième mode de réalisation diffère des modes de réalisation précédemment présentés uniquement par ce qui suit. Les éléments analogues portent les mêmes références.

Selon ce mode de réalisation, les moyens d'entrainement 22 comprennent le moteur d'entrainement 12, un disque d'interaction magnétique 64 et, pour chaque ventilateur, une pluralité d'aimants 66.

Le disque d'interaction magnétique 64 est solidaire en rotation de l'arbre central 16 et s'étend radialement autour de l'arbre central.

Le disque d'interaction magnétique 64, comprend par exemple un plateau 67 de préférence cylindrique et une pluralité d'extrusions faisant radialement saillie du plateau 67, de préférence en des positions angulaires régulières. Le disque d'interaction magnétique 64 forme, vu parallèlement à l'axe central X-X', un disque au contour crénelé.

Le disque d'interaction magnétique 64 comprend de préférence entre trente et quatre-vingt-dix extrusions 68.

Le disque d'interaction magnétique 64 coopère avec la pluralité d'aimants 66 de chaque ventilateur 20 pour entrainer en rotation chaque ventilateur 20.

Chaque ventilateur 20 comprend, par exemple en sa périphérie, un anneau de maintien 70 des aimants 66. L'anneau de maintien 70 est par exemple fixé en l'extrémité radiale des pâles 35.

Les aimants 66 d'un ventilateur 20 respectif sont solidaires en rotation dudit ventilateur 20 respectif. Les aimants 66 sont de préférence disposés autour du corps 34 de ventilateur 20. Les aimants sont de préférence disposés autour de l'axe central X-X' en des positions angulaires régulières.

Les aimants 66 sont de préférence fixés à l'anneau de maintien 70. Les aimants sont alors disposés radialement autour de l'extrémité des pâles 35.

Entre dix et trente aimants 66 sont de préférence disposés autour de chaque ventilateur 20.

Chaque aimant 66 génère un champ magnétique. Chaque aimant génère en particulier une force électromagnétique sur le disque d'interaction magnétique 64. En particulier, chaque aimant 66 génère sur une extrusion 68 une force électromagnétique plus importante que sur le plateau 67.

Selon ce quatrième mode de réalisation, chaque ventilateur 20 est entrainé en rotation dans un sens de rotation inversé par rapport au sens de rotation de l'arbre central 16.

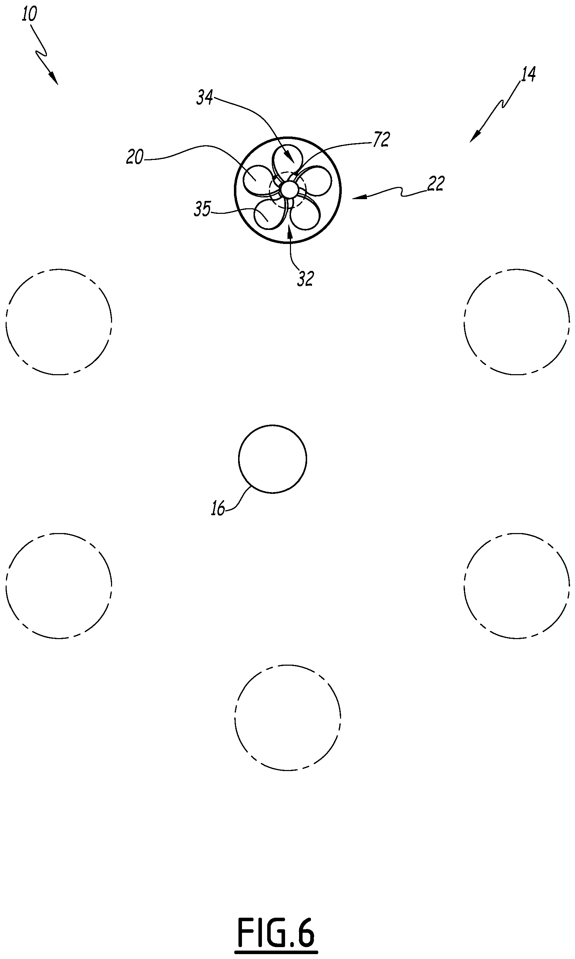

En référence à la figure 6, un cinquième mode de réalisation de l'invention va maintenant être présenté. Ce cinquième mode de réalisation diffère des modes de réalisation précédemment présentés uniquement par ce qui suit. Les éléments analogues portent les mêmes références.

Selon ce cinquième mode de réalisation, les moyens d'entrainement 22 comprennent, pour chaque ventilateur 20, un moteur électrique 72 d'entrainement dudit ventilateur.

Chaque moteur électrique 72 est configuré pour entrainer en rotation chaque ventilateur indépendamment des autres ventilateurs 20 de la pluralité de ventilateurs.

Chaque moteur électrique 72 entraine par exemple le ventilateur 20 directement par le moyeu du ventilateur, un axe de rotation du moteur électriques 72 étant connecté au moyeu du ventilateur.

Selon ce cinquième mode de réalisation, le sens de rotation de chaque ventilateur 20 est indépendant du sens de rotation de l'arbre central 16.

Selon une variante non représentée, chaque ventilateur 20 comprend un contour de coopération semblable au contour d'entrainement 54 décrit en référence au deuxième mode de réalisation. Chaque moteur électrique entraine alors en rotation une roue coopérant avec le contour de coopération de chaque ventilateur 20.

Un fonctionnement d'un dispositif de ventilation 24 tel que précédemment décrit va maintenant être présenté.

Selon la première, la deuxième, la troisième et la quatrième variante, la vitesse de rotation des ventilateurs 20 est proportionnelle à la vitesse de rotation de l'arbre central 16.

Selon ces variantes, la rotation de l'arbre central 16 entraine les moyens d'entrainement 22 en rotation, les moyens de d'entrainement 22 entrainant la pluralité de ventilateurs 20 en rotation.

La vitesse de rotation de la pluralité de ventilateur 20 par rapport à la vitesse de rotation de l'arbre central 16 dépend d'un rapport de réduction des moyens d'entrainement 22. Le rapport de réduction correspond au rapport du nombre de dents principales 44 sur le rapport de nombre de dents secondaires 48 dans le premier mode de réalisation. Le rapport de réduction correspond au diamètre de la roue d'entrainement 52 sur le diamètre du contour d'entrainement selon le deuxième mode de réalisation. Le rapport de réduction correspond au rapport du diamètre de la région d'entrainement 60 sur le diamètre de la région entrainée 62 selon le troisième mode de réalisation. Le rapport de réduction correspond au rapport du nombre d'extrusions 68 sur le nombre d'aimants 66 pour chaque ventilateur.

La vitesse de rotation des ventilateurs 20 correspond à la vitesse de rotation de l'axe central 16 multiplié par le rapport de réduction. Les ventilateurs 20 génèrent un flux d'air au travers des orifices de ventilation 32, en entrainant de l'air entre la face intérieure 26 et la face extérieure 28.

En fonctionnement normal, le moteur d'entrainement 12 entraine l'arbre moteur 13 et l'arbre central 16 selon un sens de rotation défini, nommé par la suite sens de rotation normal de l'arbre central 16. En fonctionnement normal, les ventilateurs 20 sont entrainés en rotation dans un sens de rotation défini déterminé par le sens de rotation de l'arbre central 16, ce sens de rotation étant nommé sens de rotation normal des ventilateurs. Selon les différentes variantes, le sens de rotation normal des ventilateurs 20 est le même que le sens de rotation normal de l'arbre central 16 ou est inversé par rapport au sens de rotation normal de l'arbre central 16.

Lorsque les ventilateurs 20 sont entrainés en rotation dans leur sens de rotation normal, les ventilateurs 20 génèrent par exemple un flux d'air depuis la face extérieure 26 vers la face intérieure 28. Le flux d'air circule alors à l'intérieur du carter pour refroidir le moteur d'entrainement 22. Les ventilateurs 20 sont conformés pour entrainer l'air depuis la face extérieure 26 vers la face intérieure 28 lorsqu'ils sont entrainés en rotation dans leur sens de rotation normal, et inversement. En particulier, la forme des pâles 35 est adaptée à générer le flux d'air depuis la face extérieure 26 vers la face intérieure 28 lorsque le ventilateur 20 est entrainé en rotation dans son sens de rotation normal. Les pales 35 sont dans une première configuration si le sens de rotation normal des ventilateurs 20 est le même que le sens de rotation normal de l'arbre central 16 et dans une deuxième configuration si le sens de rotation normal des ventilateurs 20 est inversé par rapport au sens de rotation normal de l'arbre central 16, chacune de ces configurations étant adaptée pour entrainer l'air depuis la face extérieure 26 vers la face intérieure 28 lorsque les ventilateurs sont entrainés en rotation dans leur sens de rotation normal.

Toutefois, lorsque l'un ou plusieurs des orifices de ventilation 32 est obturé, une perte de charge des ventilateurs peut être détectée. Le moteur d'entrainement 12 est alors avantageusement entrainé dans sens opposé du sens de rotation normal pour entrainer l'arbre central 16 en rotation dans le sens opposé au sens de rotation normal de l'arbre central 16. Les ventilateurs 20 sont alors eux aussi entrainés dans le sens opposé de leur sens de rotation normal, ce sens de rotation étant par la suite appelé sens de rotation inversé.

Lorsque les ventilateurs 20 sont entrainés en rotation dans leur sens de rotation inversé, les ventilateurs 20 génèrent par exemple un flux d'air depuis la face intérieure 28 vers la face extérieure 26. Les ventilateurs génèrent alors un flux d'air s'échappant du carter 18. Comme le flux d'air dit inversé est orienté dans une direction opposée au flux d'air circulant au travers des orifices de ventilation lorsque les ventilateurs tournent dans un sens dit normal, le flux dit inversé expulse tout élément ayant été attiré par un flux d'air dit normal. En particulier, en inversant le sens de rotation du moteur d'entrainement 12, le flux d'air enlève les éléments obturants ayant été attiré par le flux d'air généré avant l'inversement du sens de rotation du moteur d'entrainement 12.

Selon la cinquième variante, la vitesse de rotation des ventilateurs 20 est indépendante de la vitesse de rotation de l'arbre central 16. La vitesse de rotation de chaque ventilateur 20 est de préférence indépendante de la vitesse de rotation du reste de la pluralité de ventilateurs 20.

La vitesse de rotation de chaque moteur électrique 72 et ainsi la vitesse de rotation de chaque ventilateur 20 est alors adaptée aux besoins de ventilation du moteur d'entrainement 12. Chaque moteur électriques 72 est par exemple connecté à une pluralité de sondes de température pour contrôler la vitesse de rotation des ventilateurs 20.

Lorsqu'un élément obstrue un des orifices de ventilation 32, le sens de rotation du ventilateur générant un flux d'air au travers de cet orifice de ventilation 32 est avantageusement inversé. Le flux d'air généré après l'inversion du sens de rotation éjecte alors l'élément obstruant.

Le dispositif de ventilation 14 selon l'invention est particulièrement avantageux puisqu'il permet l'utilisation de ventilateurs de dimensions restreintes ce qui limite le bruit aéraulique généré par le dispositif de ventilation 14. La vitesse de rotation élevée de tels ventilateurs 20 est par ailleurs particulièrement efficace pour la ventilation du moteur d'entrainement 12. La possibilité d'inverser le sens de rotation d'un ou de plusieurs des ventilateurs 20, particulièrement en utilisant des ventilateurs axiaux, est par ailleurs particulièrement adaptée pour limiter le risque d'obturation du dispositif de ventilation 14 et/ou pour enlever facilement tout élément obturant le dispositif de ventilation 14.

La disposition de chacun des ventilateurs axiaux 20 est particulièrement adaptée à la ventilation du moteur d'entrainement 12.

L'utilisation d'une roue dentée 38 et d'un pignon 40 est particulièrement adaptée pour obtenir des moyens d'entrainement 22 robustes.

L'utilisation d'une roue d'entrainement 52 et d'un contour d'entrainement 54 est particulièrement adaptée pour obtenir des moyens d'entrainement 22 silencieux.

L'utilisation d'une courroie 58 permet par exemple d'atteindre des rapports de réduction élevés.

L'utilisation d'un disque d'interaction magnétique 64 est particulièrement avantageuse pour obtenir des moyens d'entrainement 22 silencieux ayant une durée de vie élevée.

L'utilisation d'un moteur électriques 72 pour chacun des ventilateurs 20 est particulièrement adaptée pour optimiser la ventilation du moteur d'entrainement 12.

## Revendications

1. Dispositif (14) de ventilation de moteur d'entraînement (12), notamment de moteur d'entraînement (12) de véhicule (10) ferroviaire, comprenant :
- un arbre central (16) s'étendant selon un axe central (X-X'), destiné à être entrainé en rotation par ledit moteur d'entrainement (12) ;
- un carter (18), disposé autour de l'arbre central (16) et comprenant une pluralité d'orifices de ventilation (32), le carter (18) comprenant une face intérieure (26) et une face extérieure (28) ;
**caractérisé en ce que** le dispositif de ventilation (14) comprend :
- une pluralité de ventilateurs axiaux (20), chaque ventilateur axial (20) étant disposé dans un orifice de ventilation (32) ; et
- des moyens d'entrainement (22) des ventilateurs axiaux (20),
les moyens d'entrainement (22) étant adaptés pour entrainer en rotation la pluralité de ventilateurs axiaux (20) selon un sens de rotation normal pour générer un flux d'air depuis la face extérieure (28) vers la face intérieure (26) et pour entrainer en rotation la pluralité de ventilateurs axiaux (20) selon un sens de rotation inversé pour générer un flux d'air depuis la face intérieure (26) vers la face extérieure (28).

2. Dispositif de ventilation (14) selon la revendication 1, dans lequel l'axe de rotation (R-R') de chacun des ventilateurs axiaux (20) est sensiblement parallèle à l'axe central (X-X').

3. Dispositif de ventilation (14) selon l'une des revendications 1 ou 2, dans lequel la pluralité de ventilateurs axiaux (20) est disposée radialement autour de l'axe central (X-X').

4. Dispositif de ventilation selon l'une quelconque des revendications précédentes, dans lequel la pluralité de ventilateurs axiaux (20) s'étend dans un plan sensiblement perpendiculaire à l'axe central (X-X').

5. Dispositif de ventilation (14) selon l'une quelconque des revendications précédentes dans lequel les moyens d'entrainement (22) comprennent :
- le moteur d'entrainement (12);
- une roue dentée (38) solidaire en rotation de l'arbre central (16) et s'étendant radialement autour de l'arbre central (16) ; et
- pour chaque ventilateur axial (20), un pignon (40) solidaire en rotation dudit ventilateur axial (20),
la roue dentée (38) coopérant avec chaque pignon (40) pour entrainer en rotation chaque ventilateur axial (20) lors de la rotation de l'arbre central (16).

6. Dispositif de ventilation (14) selon l'une des revendications 1 à 4, dans lequel les moyens d'entrainement (22) comprennent :
- le moteur d'entrainement (12) ;
- une roue d'entrainement (52), solidaire en rotation de l'arbre central (16) et s'étendant radialement autour de l'arbre central (16), une périphérie de la roue d'entrainement (52) comprenant une bande d'entrainement (56) ; et
- pour chaque ventilateur axial (20), un contour d'entrainement (54) solidaire en rotation dudit ventilateur axial (20),
la bande d'entrainement (56) coopérant avec le contour d'entrainement (54) en générant une friction, la friction étant adaptée pour entrainer en rotation chaque ventilateur axial (20) lors de la rotation de l'arbre central (16).

7. Dispositif de ventilation (14) selon l'une des revendications 1 à 4, dans lequel les moyens d'entrainement (22) comprennent :
- le moteur d'entrainement (12); et
- au moins une courroie (58),
la courroie (58) coopérant avec l'arbre central (16) et avec au moins un ventilateur axial (20) pour entrainer le ou les ventilateur axiaux (20) lors de la rotation de l'arbre central (16).

8. Dispositif de ventilation (14) selon l'une des revendications 1 à 4, dans lequel les moyens d'entrainement (22) comprennent :
- le moteur d'entrainement (12) ;
- un disque d'interaction magnétique (64) solidaire en rotation de l'arbre central (16) et s'étendant radialement autour de l'arbre central (16) ; et
- pour chaque ventilateur axial (20), une pluralité d'aimants (66) solidaires en rotation dudit ventilateur axial (20),
chaque aimant (66) générant une force magnétique sur le disque d'interaction magnétique (64), le disque d'interaction magnétique (64) coopérant avec la pluralité d'aimants (66) de chaque ventilateur axial (20) pour entrainer en rotation chaque ventilateur axial (20).

9. Dispositif de ventilation (14) selon l'une des revendications 1 à 4, dans lequel les moyens d'entrainement (22) comprennent, pour chaque ventilateur axial (20), un moteur électrique (72) d'entrainement dudit ventilateur axial (20), chaque moteur électrique (72) étant configuré pour entrainer en rotation chaque ventilateur axial (20) indépendamment des autres ventilateurs axiaux (20) de la pluralité de ventilateurs axiaux (20).

10. Véhicule (10), notamment ferroviaire, comprenant un dispositif de ventilation (14) selon l'une quelconque des revendications 1 à 9.

## Patentansprüche

1. Belüftungsvorrichtung (14) eines Antriebsmotors (12), insbesondere eines Antriebsmotors (12) eines Schienenfahrzeugs (10), umfassend:
- eine mittlere Welle (16), die sich entlang einer Mittelachse (X-X') erstreckt und dazu bestimmt ist, von dem Antriebsmotor (12) in Drehung versetzt zu werden;
- ein Gehäuse (18), das um die mittlere Welle (16) angeordnet ist und eine Vielzahl von Belüftungsöffnungen (32) umfasst, das Gehäuse (18) umfassend eine Innenseite (26) und eine Außenseite (28);
**dadurch gekennzeichnet, dass** die Belüftungsvorrichtung (14) Folgendes umfasst:
- eine Vielzahl von Axiallüftern (20), wobei jeder Axiallüfter (20) in einer Belüftungsöffnung (32) angeordnet ist; und
- Antriebseinrichtungen (22) der Axiallüfter (20),
wobei die Antriebseinrichtungen (22) angepasst sind, um die Vielzahl von Axiallüftern (20) in einer normalen Drehrichtung zu drehen, um einen Luftstrom von der Außenseite (28) zu der Innenseite (26) zu erzeugen, und um die Vielzahl von Axiallüftern (20) in einer umgekehrten Drehrichtung zu drehen, um einen Luftstrom von der Innenseite (26) zu der Außenseite (28) zu erzeugen.

2. Belüftungsvorrichtung (14) nach Anspruch 1, wobei die Drehachse (R-R') von jedem der Axiallüfter (20) im Wesentlichen parallel zu der Mittelachse (X-X') ist.

3. Belüftungsvorrichtung (14) nach einem der Ansprüche 1 oder 2, wobei die Vielzahl von Axiallüftern (20) radial um die Mittelachse (X-X') angeordnet sind.

4. Belüftungsvorrichtung nach einem der vorhergehenden Ansprüche, wobei sich die Vielzahl von Axiallüftern (20) in einer Ebene im Wesentlichen senkrecht zu der Mittelachse (X-X') erstrecken.

5. Belüftungsvorrichtung (14) nach einem der vorherigen Ansprüche, wobei die Antriebseinrichtungen (22) Folgendes umfassen:
- den Antriebsmotor (12);
- ein Zahnrad (38), das drehfest mit der mittleren Welle (16) verbunden ist und sich radial um die mittlere Welle (16) erstreckt; und
- für jeden Axiallüfter (20) ein Ritzel (40), das drehfest mit dem Axiallüfter (20) verbunden ist,
wobei das Zahnrad (38) mit jedem Ritzel (40) zusammenwirkt, um jeden Axiallüfter (20) bei der Drehung der mittleren Welle (16) in Drehung zu versetzen.

6. Belüftungsvorrichtung (14) nach einem der Ansprüche 1 bis 4, wobei die Antriebseinrichtungen (22) Folgendes umfassen:
- den Antriebsmotor (12);
- ein Antriebsrad (52), das drehfest mit der mittleren Welle (16) verbunden ist und sich radial um die mittlere Welle (16) erstreckt, wobei ein Umfang des Antriebsrads (52) ein Antriebsband (56) umfasst; und
- für jeden Axiallüfter (20) eine Antriebskontur (54), die drehfest mit dem Axiallüfter (20) verbunden ist,
wobei das Antriebsband (56) mit der Antriebskontur (54) zusammenwirkt, indem es eine Reibung erzeugt, wobei die Reibung angepasst ist, um jeden Axiallüfter (20) bei der Drehung der mittleren Welle (16) in Drehung zu versetzen.

7. Belüftungsvorrichtung (14) nach einem der Ansprüche 1 bis 4, wobei die Antriebseinrichtungen (22) Folgendes umfassen:
- den Antriebsmotor (12); und
- mindestens einen Riemen (58),
wobei der Riemen (58) mit der mittleren Welle (16) und mit mindestens einem Axiallüfter (20) zusammenwirkt, um den oder die Axiallüfter (20) bei der Drehung der mittlere Welle (16) anzutreiben.

8. Belüftungsvorrichtung (14) nach einem der Ansprüche 1 bis 4, wobei die Antriebseinrichtungen (22) Folgendes umfassen:
- den Antriebsmotor (12);
- eine magnetische Interaktionsscheibe (64), die drehfest mit der mittleren Welle (16) verbunden ist und sich radial um die mittlere Welle (16) erstreckt; und
- für jeden Axiallüfter (20) eine Vielzahl von Magneten (66), die drehfest mit dem Axiallüfter (20) verbunden sind,
wobei jeder Magnet (66) eine magnetische Kraft auf der magnetischen Interaktionsscheibe (64) erzeugt, wobei die magnetische Interaktionsscheibe (64) mit der Vielzahl von Magneten (66) von jedem Axiallüfter (20) zusammenwirkt, um jeden Axiallüfter (20) in Drehung zu versetzen.

9. Belüftungsvorrichtung (14) nach einem der Ansprüche 1 bis 4, wobei die Antriebseinrichtungen (22) für jeden Axiallüfter (20) einen Elektromotor (72) zum Antreiben des Axiallüfters (20) umfassen, wobei jeder Elektromotor (72) konfiguriert ist, um jeden Axiallüfter (20) unabhängig von den anderen Axiallüftern (20) der Vielzahl von Axiallüftern (20) in Drehung zu versetzen.

10. Fahrzeug (10), insbesondere Schienenfahrzeug, umfassend eine Belüftungsvorrichtung (14) nach einem der Ansprüche 1 bis 9.

## Claims

1. Ventilation device (14) for a drive motor (12), in particular for a drive motor (12) of a rail vehicle (10), comprising:
- a central shaft (16) extending along a central axis (X-X'), intended to be driven in rotation by said drive motor (12);
- a housing (18), disposed around the central shaft (16) and comprising a plurality of ventilation holes (32), the housing (18) comprising an inner face (26) and an outer face (28);
**characterised in that** the holding element (14) comprises:
- a plurality of axial fans (20), each axial fan (20) being disposed in a ventilation port (32); and
- drive means (22) for the axial fans (20),
the drive means (22) being adapted to rotate the plurality of axial fans (20) in a normal direction of rotation to generate airflow from the outer face (28) to the inner face (26) and to rotate the plurality of axial fans (20) in a reverse direction of rotation to generate airflow from the inner face (26) to the outer face (28).

2. A ventilation device (14) according to claim 1, wherein the axis of rotation (R-R') of each of the axial fans (20) is substantially parallel to the central axis (X-X').

3. A ventilation device (14) according to one of claims 1 or 2, wherein the plurality of axial fans (20) is arranged radially around the central axis (X-X').

4. A ventilation device according to any of the preceding claims, wherein the plurality of axial fans (20) extend in a plane substantially perpendicular to the central axis (X-X').

5. A device (14) according to any one of the preceding claims, wherein the device (22) comprises:
- the drive wheel (12);
- a gear wheel (38) rotatably connected to the central shaft (16) and extending radially around the central shaft (16); and
- for each axial fan (20), a pinion (40) integral in rotation with said axial fan (20),
the gear wheel (38) cooperating with each pinion (40) to rotate each axial fan (20) upon rotation of the central shaft (16).

6. The detector (14) according to any one of claims 1 to 4, wherein the electronic means (22) comprise:
- the drive wheel (12);
- a drive wheel (52), rotating together with the central shaft (16) and extending radially around the central shaft (16), a periphery of the drive wheel (52) comprising a drive band (56); and
- for each axial fan (20), a drive contour (54) integral in rotation with said axial fan (20),
the drive belt (56) cooperating with the drive contour (54) by generating friction, the friction being adapted to rotate each axial fan (20) upon rotation of the central shaft (16).

7. The detector (14) according to any one of claims 1 to 4, wherein the electronic means (22) comprise:
- the drive motor (12); and
- at least one belt (58),
the belt (58) cooperating with the central shaft (16) and with at least one axial fan (20) to drive the axial fan(s) (20) during rotation of the central shaft (16).

8. The detector (14) according to any one of claims 1 to 4, wherein the electronic means (22) comprise:
- the drive wheel (12);
- a magnetic interaction disc (64) rotatably connected to the central shaft (16) and extending radially around the central shaft (16); and
- for each axial fan (20), a plurality of magnets (66) integral in rotation with said axial fan (20),
each magnet (66) generating a magnetic force on the magnetic interaction disc (64), the magnetic interaction disc (64) cooperating with the plurality of magnets (66) of each axial fan (20) to drive each axial fan (20) in rotation.

9. A ventilation device (14) according to any one of claims 1 to 4, wherein the drive means (22) comprise, for each axial fan (20), an electric motor (72) for driving said axial fan (20), each electric motor (72) being configured to rotate each axial fan (20) independently of the other axial fans (20) of the plurality of axial fans (20) independently of the other axial fans (20) of the plurality of axial fans (20).

10. A vehicle (10), particularly a railway vehicle, comprising at least one assembly (14) according to any one of claims 1 to 9.
